# EUROPEAN PATENT SPECIFICATION

(11) **EP 4 453 679 B1**
(45) Date of publication and mention of the grant of the patent: **01.04.2026**
(21) Application number: 22838869.0
(22) Date of filing: 22.12.2022
(51) Int. Cl.: G05B 23/02

(54) **A METHOD OF MONITORING PROCESSES IN AN URBAN WATER CYCLE**
VERFAHREN ZUR ÜBERWACHUNG VON VERFAHREN IN EINEM STÄDTISCHEN WASSERKREISLAUF
PROCÉDÉ DE SURVEILLANCE DE PROCESSUS DANS UN CYCLE D'EAU URBAIN

(30) Priority: 22.12.2021 EP 21217032
(43) Date of publication of application: 30.10.2024
(73) Proprietor: Veolia Water Solutions & Technologies Support, 94410 Saint-Maurice (FR)
(72) Inventor: MUNK-NIELSEN, Thomas, 4300 Holbæk (DK); RØNNOW THOMSEN, Henrik Andreas, 2100 Copenhagen Ø (DK); MADSEN, Henrik, 2800 Kongens Lyngby (DK); STENTOFT, Peter Alexander, 2200 Copenhagen N (DK); KLOPPENBORG MØLLER, Jan, 2800 Kongens Lyngby (DK)
(74) Representative: Inspicos P/S
(86) International application number: PCT/EP2022/087472
(87) International publication number: WO 2023/118433

(56) References cited:
- WO-A1-2015/062613
- WO-A2-2010/142004
- AU-A1- 2020 240 738
- KR-B1- 101 985 343
- US-A1- 2014 052 422
- US-A1- 2014 238 932
- US-A1- 2018 327 292
- US-A1- 2021 356 943
- US-B2- 8 110 109

## Description

### Field of the disclosure

The present disclosure relates to an improved method of monitoring processes in an urban water cycle.

### Background of the disclosure

Typically, processes in an urban water cycle must be monitored frequently by an operator to ensure that the processes are running as intended. This is a demanding task which typically requires manual and time-consuming overview, analysis, and evaluation of several sensors and control signals.

Prior art document AU2020240738 discloses a monitoring method for determining the operating state of a plant even when the amount of actually measured process data is limited. A monitoring device is provided with input units for receiving inputs of process data related to a plant; a model generation unit for generating a model representing the relationship between process data on the basis of the input process data; a determination unit for determining the operating state of the plant, and a display unit for displaying the determination result from the determination unit.

KR101985343 discloses a system for analysing and controlling measurement data based on an emulator, which analyses real-time measurement data operated in the existing instrumentation control process (water treatment process, manufacturing process, etc.) to check whether the process is in a normal state and to generate conditions meeting optimal operation conditions, and compares the real-time measurement data with the past measurement data through big data storage to identify an operation state of the process and to predict failures.

US2021356943 discloses a monitoring apparatus configured to generate time-series predicted data based on time-series measured data and a prediction model that generates predicted data including one or more predicted values predicted to be output from one or more sensors; and generate, for a first sensor among the one or more sensors, a displayed image including a measured value graph representing a temporal change in a measured value included in the time-series measured data in a second period after a first period, a predicted value graph representing a temporal change in a predicted value included in time-series predicted data in the second period, past distribution information representing a distribution of a measured value in the first period, and measurement distribution information representing a distribution of the measured value included in the time-series measured data in the second period.

### Description of the disclosure

It is an object of embodiments of the disclosure to provide an improved method of monitoring processes in an urban water cycle.

It is a further object of embodiments of the disclosure to provide an improved method of monitoring processes in an urban water cycle which is less time-consuming.

According to a first aspect of the invention, this disclosure provides a method of monitoring a plurality of processes in an urban water cycle according to claim 1.

In the context of the present disclosure the term 'urban water cycle' should be understood as general processes covering supply and sanitation services of water, including plants, pipes, and other elements. The processes may include processes relating to e.g. water catchment to obtain raw water, water treatment to treat water to make it suitable for drinking water, process water, and other types of water dependent on the subsequent use, water storage, including transportation of water to the storages e.g. by pumping, water distribution from storages to consumption sites, water collection after use, including transportation from consumption sites to wastewater treatment plants by sewage networks, and wastewater treatment which may make it possible to reuse water and to return it to the environment.

The processes in an urban water cycle may be monitored frequently by an operator to ensure that the processes are running as intended. Thus, monitoring as opposed to control is typically used to evaluate whether a process is running as expected. Measurements may be included in both monitoring and control, where measurement results often are used in a feedforward model to optimize the control in a control method. When monitoring, measurements may be used to evaluate processes over time in order to conclude if the overall dynamics are acceptable. Thus, implying that monitoring of e.g., equipment and bio/chemical processes is essential to secure that control can be applied to processes in an urban water cycle.

The method comprises a step of defining an event having impact on a process activity of at least one process in the urban water cycle. The event may be a user-initiated event or an event which is not initiated by a user, such as a rain event. The event may also be denoted a disturbance as it may change the process activity due to its impact hereon. A user-initiated event may as an example be a change of a setting within a plant within the urban water cycle; such as initiation or termination of pumping activity in a sewer system and/or in a wastewater treatment plant, initiation, increase, decrease, or termination of aeration activity, dosing of a substance e.g. in a wastewater treatment plant, etc.

When monitoring the processes, a time-period is defined. The duration of the time-period may in one embodiment be dependent on the defined event. In an alternative embodiment, the time-period may be defined as a fixed time-period. In a further alternative, the time-period may be defined as a period comprising a fixed amount of data.

The event has an impact on a process activity of at least one process. It should be understood that an event may have an impact on a plurality of process activities of one or more processes. As an example, an event in the form of initiating aeration may impact different biomass activities, such as concentrations of ammonium, nitrate, phosphorus, etc., which may be lowered/increased, respectively, when aeration is initiated.

The method comprises a step of defining a first data set which represents at least one expected process activity under impact of the event. The data set comprises interrelated values of expected process activity and point in time in the time-period.

If the defined event as an example is initiation of aeration, the expected process activity may as an example be an increase of nitrate content. The first data set representing at least one expected process activity may thus comprise interrelated values of expected nitrate content and point in time, during the time-period. As initiation of aeration may further result in decrease of ammonium content, the first data set representing at least one expected process activity may further comprise interrelated values of expected ammonium content and point in time.

The first data set is determined based on previous measurements, on data analyses, e.g. by including statistical analysis, on modelling, etc. It should be understood that the first data set may be determined based on different input, such as a combination of previous measurements and data analysis.

The method further comprises a step of determining a second data set representing actual process activity in the time-period, where the actual process activity is process activity under impact of the event. As the event may be seen as a disturbance, as it may change the process activity due to its impact hereon, the actual process activity may also be denoted a disturbed process activity.

The actual process activity may as an example be measured by one or more sensors arranged in the urban water cycles. As an example, a sensor arranged in a process tank in a wastewater treatment plant may be used to measure nitrate content and/or ammonium content. As a further example, a sensor arranged in the sewer system may be used to measure flow. A sensor in a water treatment plant for treatment of raw water may be used to measure turbidity. The sensor(s) may be configured to send a signal representing the measured content/measured parameter to a control unit which may store the measured content. The signal may further provide information of the point in time for the measurement, e.g., by providing a time stamp to the measurement. Alternatively, the point in time may be associated to the actual process activity by the control unit upon receipt of the signal. Thus, the second data set may as the first data set comprise interrelated values of process activity and point in time, where the process activity in the first data set is expected process activity and in the second data set is actual process activity.

As described above, the step of determining the second data set representing actual process activity is based at least partly on measurements within the urban water cycle. As an example, data from the measurements may be used without any data processing. Alternatively, at least some of the measurement data may be processed and subsequently used when determining the second data set representing actual process activity.

Thus, the second data set may comprise directly determined data; i.e. values measured by one or more sensors or may comprise indirectly determined data; i.e. values being calculated/assessed or otherwise determined based on measured values.

At least some of the measurements may be online measurements, whereby the step of determining the second set representing actual process activity may be based on data continuously received to thereby provide a second data set which is based on real time values.

The first and second data sets may be stored in a computer system. It should further be understood that the first and/or second data set may further at least partly be determined by the computer system, e.g., based on measured values. The computer system could be constituted by one single computer with a data storage capacity and computer capability enabling storage of the first and second data sets and/or measured values. However, the computer system could also be distributed between two or more computer units. It could be distributed between different locations, and it could be set up for controlled access such that specific individuals may access individual parts of the computer system and individual parts of information contained therein.

It should further be understood that the method may be integrated in a computer system. The step of defining an event may be carried out by the computer, e.g., in the dependency of a predetermined time schedule. However, the step of defining the event may alternatively or additionally be carried out manually. As an example, an event in the form of increasing aeration of a tank may automatically be carried out based on a signal from the computer system, e.g., based on measurements and/or dependent on a predetermined time schedule. In a computer implemented embodiment of the method, the step of defining the event may be manually carried out, as an operator may e.g., manually initiate increased aeration.

In a computer implemented embodiment of the method, the computer system may comprise a plurality of defined events which may be automatically initiated e.g., based on measurements and/or time schedule. Such events may as an example comprise start aeration, stop aeration, change aeration rate, start flow, stop flow, change flow rate, dose precipitation chemical, dose polymer, maturate filters, start by-pass flow, stop by-pass flow, change by-pass flow rate, etc.

It should further be understood that in a computer implemented embodiment of the method, the computer system that performs calculations and stores data may be located directly onsite, such as on a local server/computation unit or remotely located, such as in a cloud-based platform. In both cases, data from sensors and equipment may be handled using a Supervisory Control and Acquisition System (SCADA).

The method comprises a further step of comparing the second data set representing actual process activity with the first data set representing expected process activity. The comparison may be carried out by use of the control unit and/or a computer system in communication with the sensor(s) and/or the control unit. In one embodiment, the step of comparing may be automatically carried out by a computer system.

Based on the comparison of the first and second data set, a notification relating to the process activity for the at least one process is generated, if a deviation between the first data set and the second data set exceeds a predetermined threshold value in the time-period.

An operator may receive the notification and based on the received notification, the operator may start or increase surveillance of the defined event and/or the process activity on which the defined event has an impact. Thus, the method of monitoring a plurality of processes may be an evaluation of whether the processes behave as expected, and if not, it may further be investigated why the processes do not behave as expected.

As an example, the predetermined threshold value for the deviation may be in the range of +/- 5% in relation to the expected process activity. It should, however, be understood that the predetermined threshold value for the deviation may depend on the defined event, where the predetermined threshold value for the deviation may be in the range of +/- 1% in relation to a first expected process activity, in the range of +/- 5% in relation to a second expected process activity, in the range of +/- 10% in relation to a third expected process activity, and in the range of +/- 30% in relation to a fourth expected process activity. It should further be understood that the predetermined threshold value may change, such as dependent on the time of the day and/or dependent on the time of the year. The deviation may be an average with-in the time-period, whereby a notification is generated if the average exceeds a predetermined threshold value. Alternatively, the deviation may be single value, whereby a notification is generated as soon as the deviation exceeds a predetermined threshold value. It should be understood that these steps may be combined, whereby a notification is generated if the average exceeds a predetermined first threshold value and a notification is generated as soon as the deviation exceeds a predetermined threshold value.

The urban water cycle may comprise at least one of a wastewater treatment plant for treatment of wastewater, a sewer system, a water treatment plant for treatment of raw water, and a water network for treated water. The water network and the sewer system may comprise a plurality of pipes, water pipes and sewer pipes, respectively, and a plurality of tanks, water tanks and sewer tanks, respectively. The wastewater treatment plant may comprise process tanks, clarification tanks, a grid chamber, etc. The treated water may as an example be drinking water and/or process water.

The process activity may be selected from a group consisting of: biomass activity, grit chamber activity, settler activity, clarifier activity, sewer activity, raw water activities, digester activity, dewatering activity, equalization activity, and other activities representing processes in the urban water cycle. As an example, the biomass activity may be one or more of a change over time of a content of e.g., NH4, NO3, PO4, DO, etc. The grit chamber activity may be one or more of flow, turbulence, temperature, etc. The settler activity may be one or more of SS concentration measured e.g., at the inlet, the outlet, and/or in return activated sludge, outlet turbidity, flow, return activated sludge flow, settleability, sludge blanket level, water temperature, etc. The clarifier activity may as an example be one or more of sludge blanket level, turbidity, etc. The sewer activity may be one or more of flow, level, etc. The raw water activities may as an example be coagulation, sedimentation, filtration, chlorination, etc.

The event may in one embodiment be selected from a group consisting of: start and/or stop and/or change of rate of any one of aeration, flow, return flow, recirculation flow, rain event, pumping, stirring, dosing of a substance, and backwash. It should be understood that other events capable of impacting processes of the urban water cycle may also be defined as an event.

It should further be understood that the event may be the start of one of the above examples, the termination/stop of one of the above, the change of one of the above. As an example, an event in the form of aeration may be an event in the form of starting the aeration, in the form of terminating the aeration, and in the form of changing the rate of the aeration. In a further example, an event in the form of pumping may be an event in the form of starting pumping, in the form of terminating pumping, and in the form of changing the rate of pumping.

The event may as a further example include an on/off signal, a change of a setpoint of equipment.

The event may additionally derive from a previous event. As an example, an event in the form of increased nitrate recirculation flow may have the impact of increased content of recycled DO (Dissolved Oxygen) which may disturb/have an impact on the denitrification process. The first data set may represent an expected content of recycled DO over time and may thus comprise interrelated values of the content of recycled DO and point in time in the defined time-period. A notification may thus be generated if the deviation between the first data set (expected content of DO) and the second data set (measured content of DO) exceeds a predetermined threshold value.

The increased content of DO may, however, have an impact on the denitrification process, and an additional notification may thus be generated if the deviation between a first data set representing expected content of nitrate and a second data set representing measured content of nitrate exceeds a predetermined threshold value.

The event may be controllable by a control action, and the method may comprise a step of activating the control action. The control action may as an example be start of aeration, termination of stirring, change of flow rate, etc. The step of activating the control action may be a manual action or an automatic action, e.g., in dependence of a time schedule or as determined automatically by existing control. In one embodiment, some control actions may be manually activated, whereas other control actions may be automatically activated.

In other words, the method may further comprise a step of initiating the event. As described above, the event may be a user-initiated event, an event which is not initiated by a user, such as a rain event, or an event derived from another event, such as change of a content of a substance over time initiated by the change of another substance and/or parameter.

The step of determining the second data set may be carried out in real time; i.e. the second data set may be determined based on measurements transferred, e.g. to a control unit, without any substantial delay. Thus, the second data set may be determined by automatically using data from online sensors, e.g., by the use of an algorithm without manual interference.

The step of comparing the second data set with the first data set may comprise a step of defining a delayed response time for the event, where defining of the delayed response time may be carried out by modelling and/or estimation, e.g., based on historical values.

By the term 'delayed response time' should be understood that the actual process activity may begin or may become observable after a certain time-period after the event has started, where this certain time-period is the 'delayed response time'. As an example, if the event is in the form of start aeration and the process activity is Dissolved Oxygen (DO), a change of the content of Dissolved Oxygen will only be measurable after a certain time-period; i.e. a delayed response time may be determined as part for the step of comparing the first data set and the second data set. This may be achieved by comparing the expected process activity with actual process activity at different times, i.e., by shifting the time series of one of the first and second data set to better match the other one of the first and second data set.

The first data set may comprise historical data for the process activity, where the historical data comprises interrelated values of measured process activity and point in time. The historical data is divided into a number of time segments, each comprising historical data.

The time segments may each be of the same length, such as each time segment being 10 minutes, being 1 hour, being 2 hours, being 4 hours, being 8 hours, being 12 hours, or of another length. It should however be understood that at least some of the time segments may be of different length, such as one or more time segments of 10 minutes, one or more time segments of 1 hour, or of another length.

The step of defining the first data set is based at least partly on historical data. The first data set further comprises a ranking parameter which ranks later time segments higher than earlier time segments. Thus, the latest; i.e. the newest data may be weighted higher than earlier; i.e. older data. Thus, the method may comprise a step of adding the ranking parameter as a weight factor to the data in each time segment. The ranking parameter may as an example depend on the type of process activity, the type of event defined, the time of the year, etc. Additionally, or alternatively, later time segments may be shorter than earlier time segments. By providing later time segments being shorter than older time segments, the historical data may comprise more late data than early data.

The method may further comprise a step of preparing a mathematical model providing simulation data as a function of process activity measured in the urban water cycle by at least one sensor. The step of defining the first data set may comprise a step of defining interrelated values of simulation data and point in time. In one embodiment, the first data set may be based on historical data and simulated data. Thus, the first data set representing expected process activity may be based on previously measured activity, estimated activity, calculated activity, e.g. by use of previously measured data, simulated activity, or data otherwise provided.

The mathematical models may be formulated such that 1) the models may be able to run fast enough for real-time applications, 2) information from e.g., time series of flow, rain gauges, and other factors from forecast information and/or historical data can be utilized for operational purposes, and 3) the same model may be used for both forecasting, control, simulation, risk analysis, optimization, and scenario generation.

The mathematical modelling may comprise the use of methodologies for stochastic dynamical modelling using grey-box technologies which may also be called semi-physical, transparent, mechanistic, or surrogate modelling. Consequently, it may be possible to bridge the gap between physical and statistical modelling, as combined information from physics and information from data may be used by the model. The grey-box technologies may be based on real-time data; i.e. data which is measured and subsequently transferred to the mathematical model for modelling without any substantial delay.

Alternatively, mathematical models may be based on deterministic modelling, may employ neural networks, and/or machine learning. It should be understood that other types of modelling may also be applied.

The step of determining the first data set representing at least one expected process activity may comprise a step of mathematically modelling an impact of the event on the process activity. Mathematical modelling as describe above may be applied.

As at least some events may be controllable by a control action, the method may further comprise a step of deactivating the control action based on the generated notification. The deactivation step may be a step of pausing the event or a step of completely stopping the event, by deactivating the control action.

As described above, the defined event may as an example be initiation of aeration, whereby the expected process activity may be an increase of nitrate content. The first data set representing at least one expected process activity may thus comprise interrelated values of expected nitrate content and point in time, and the second data set representing actual process activity in the time-period may comprise interrelated values of measured nitrate content and point in time. Based on the comparison of the first and second data set, a notification relating to the process activity for the at least one process is generated, if a deviation between the first data set and the second data set exceeds a predetermined threshold value. In this example, the notification may be used to provide a signal to an operator, that the aeration should be terminated.

As described above, a notification is generated if the deviation between the first data set representing expected nitrate content over time and the second data set representing measured nitrate content over time exceeds a predetermined threshold value. An operator may, based on the notification, check different elements which may have an influence on the measured value, such as a sensor measuring the nitrate content, a control unit which is used to control aeration, an air blower, a stirring unit, etc. Thus, the operator may use the notification as a starting point for manual review of the elements. Alternatively, the notification may initiate an automatic review of at least some of the elements relating to the event and/or the process activity.

The method may in one embodiment comprise a further a step of initiating a second event based on the generated notification.

### Examples

### Example 1: Process checker for alternating activated sludge nitrogen removing process

Event: Switching the mode (i.e. on/off) on the aeration equipment in the process tank(s)
Process activity: Changes in ammonium and nitrate concentrations in the process tank(s)
Description: When aeration is turned on, the observed ammonium concentration is expected to decrease, possibly after a reaction time. Likewise, the observed nitrate concentrations are expected to increase.

### Example 2: Return activated sludge

Event: Changing the flow in the return activated sludge pump
Process activity: Changes in sludge blanket height
Description: When the flow is increased in the return activated sludge pump, the sludge blanket height is expected to decrease. Likewise, the sludge blanket height is expected to increase if flow in return activated sludge pump is decreased. This might happen after a reaction time in the system.

### Example 3: Biological phosphorus removal

Event: Switching the mode (i.e. on/off) on the aeration equipment
Process activity: Changes in phosphorus concentration
Description: Similar to example 1, biological phosphorus removal is expected to change depending on changes in the mode of the aeration equipment. Aeration being turned "on" is expected to result in decreasing phosphorus concentration. Likewise, aeration turned "off" is expected to result in increasing phosphorus concentrations. This might happen after a reaction time in the system.

### Example 4: Precipitation chemical for phosphorus removal

Event: Dosing precipitation chemical
Process activity: Changes in phosphorus concentration
Description: When precipitation chemical is dosed to the system, phosphorus concentration is expected to decrease. Likewise, when the dosage of precipitation chemical is stopped, concentrations are expected to increase. This might happen after a reaction time in the system.

### Example 5: Carbon dosing

Event: Changing carbon dosing rate
Process activity: Changes in nitrate concentrations
Description: When carbon is dosed to the system, the nitrate removal rates are expected to increase, i.e. nitrate concentration is expected to decrease faster. Likewise, when carbon dosage is stopped or decreased, nitrate removal rates are expected to decrease. This might happen after a reaction time in the system.

### Example 6: Pumping station pump flow

Event: Changing the pumping flow in a pumping station
Process activity: Observed changes in filling degree in downstream basin/pipes and/or observed changes in downstream flow measurements
Description: When pumping is increased in a pump in a sewer system catchment, the downstream filling degree of certain basins and/or flow in certain pipes is expected to increase. Likewise, when pumping is decreased these are expected to decrease. This might happen after a reaction time in the system.

### Example 7: Wet weather influence checker

Event: Rain events causing peak flows that are distinguishable from dry weather flow
Process activity: Observed changes in nutrient concentrations at WWTP and/or turbidity
Description: When distinct flows caused by sufficiently large rain events are detected either upstream in the sewer system or at the inflow to the wastewater treatment plant, an increase in ammonium concentration and/or turbidity is expected. This might happen after a reaction time in the system.

### Example 8: Recirculation pumping checker

Event: Changing the recirculation pump setpoint
Process activity: Observed changes in nitrate concentrations
Description: When recirculation pumping is increased, upstream tanks that receive the wastewater from further downstream is expected to experience increasing nitrate concentration and decreasing ammonium concentration. This might happen after a reaction time in the system.

### Example 9: Digester gas production

Event: Changing the feeding flow and/or total solids (TS) concentration
Process activity: Observed changes in gas production
Description: When the feeding flow is increased and/or TS concentration is increased to the digester, gas production is expected to increase (assuming temperature etc. are kept constant). Likewise, when the feeding flow is decreased and/or TS concentration is decreased to the digester, gas production is expected to decrease. This might happen after a reaction time in the system.

### Example 10: Dewatering

Event: Changing the polymer dosing
Process activity: Changes in TS concentration dewatered sludge
Description: When the polymer dosing is increased, the TS concentration in the dewatered sludge is expected to increase. Likewise, when polymer dosing is decreased, the TS concentration in dewatered sludge is expected to decrease. This might happen after a reaction time in the system.

### Example 11: Drinking Water, Filter operation

Event: Maturation (ripening) of filters following backwash
Process activity: Changes in outlet turbidity
Description: Following backwash, the filter typically exhibits a period with reduced particle removal (the ripening/maturation period). During this period, the turbidity in the outlet of the filter is expected to decrease until optimal performance is achieved.

### Brief description of the drawings

Embodiments of the disclosure will now be further described with reference to the drawings, in which:
Fig. 1 illustrates an urban water cycle;
Fig. 2 illustrates a flow diagram for the method, and
Fig. 3 illustrates an embodiment of a flow diagram for the method.

### Detailed description of the drawings

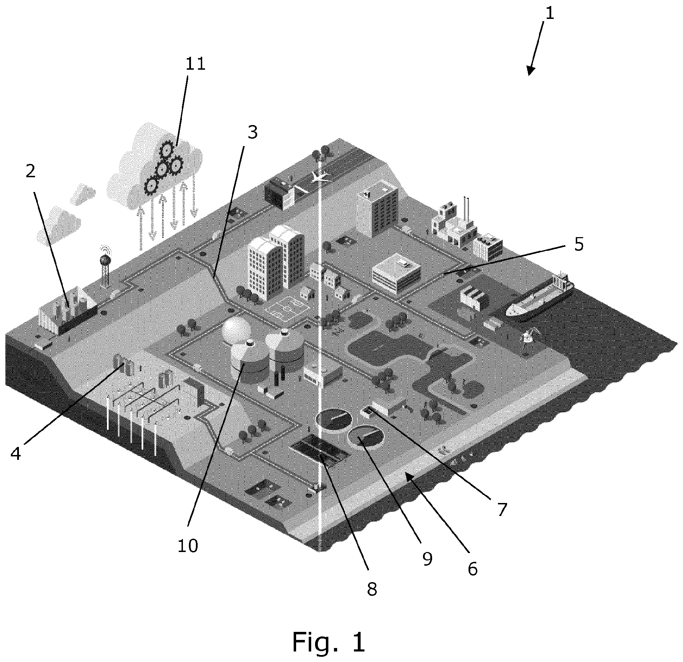

Fig. 1 illustrates an urban water cycle 1, in which general processes covering supply and sanitation services of water takes place. The processes may include processes relating to e.g. water catchment to obtain raw water, water treatment to treat water to make it suitable for drinking water, process water, and other types of water dependent on the subsequent use, water storage, including transportation of water to the storages e.g. by pumping, water distribution from storages to consumption sites, water collection after use, including transportation from consumption sites to wastewater treatment plants by sewage networks, and wastewater treatment which may make it possible to reuse water and to return it to the environment.

The illustrated urban water cycle 1 comprises a raw water treatment plant 2 for treatment of raw water, and a drinking water network in the form of water pipes 3 and water towers 4. It should be understood that the drinking water network also comprises pumps, valves, and other elements to transport drinking water from the raw water treatment plant 2 to the user. In the schematic illustration of the urban water cycle 1 these elements are omitted. Likewise, are the different plant elements of the raw water treatment plant 2 omitted.

The urban water cycle 1 further comprises a sewer system 5. The sewer system 5 comprises sewer pipes, manholes, basins, weirs, etc.

Furthermore, the urban water cycle 1 comprises a wastewater treatment plan 6 which comprises a pre-treatment section 7 with grit chamber, grease trap, etc, a biological treatment section 8, and clarifiers 9. It should be understood that the wastewater treatment plant 6 also comprises pumps, valves, and other elements.

The urban water cycle 1 further comprises anaerobic digesters 10. Rain events and evaporation are illustrated by the cloud 11 with associated arrows.

It should be understood that the above-described elements are for illustration of the urban water cycle 1, and that an urban water cycle according to the disclosure may comprises other elements too.

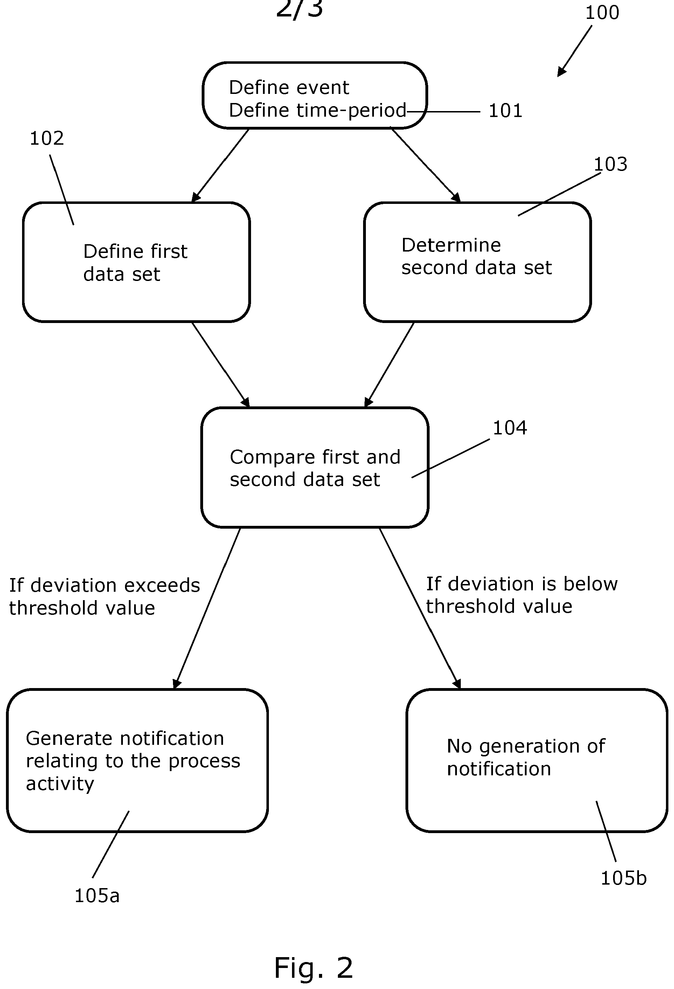

Fig. 2 illustrates a flow diagram 100 of the method. The method is initiated in step 101 in which an event having impact on a process activity of at least one process is defined. Furthermore, a time-period is defined. The duration of the time-period defined may depend on the events defines.

In step 102, a first data set representing at least one expected process activity is defined. It should be understood, that a plurality of first data sets may be defined in step 102, where each of the first data sets represents at least one expected process activity.

In step 103, a second data set representing actual process activity in the time-period is determined, where the actual process activity is process activity under impact of the event defined in step 101.

In step 104, the second data set representing actual process activity is compared with the first data set representing expected process activity.

If the deviation between the first data set and the second data set exceeds a predetermined threshold value, a notification relating to the process activity for the at least one process is generated in step 105a.

If the deviation between the first data set and the second data set is below a predetermined threshold value, no notification relating to the process activity for the at least one process is generated in step 105b.

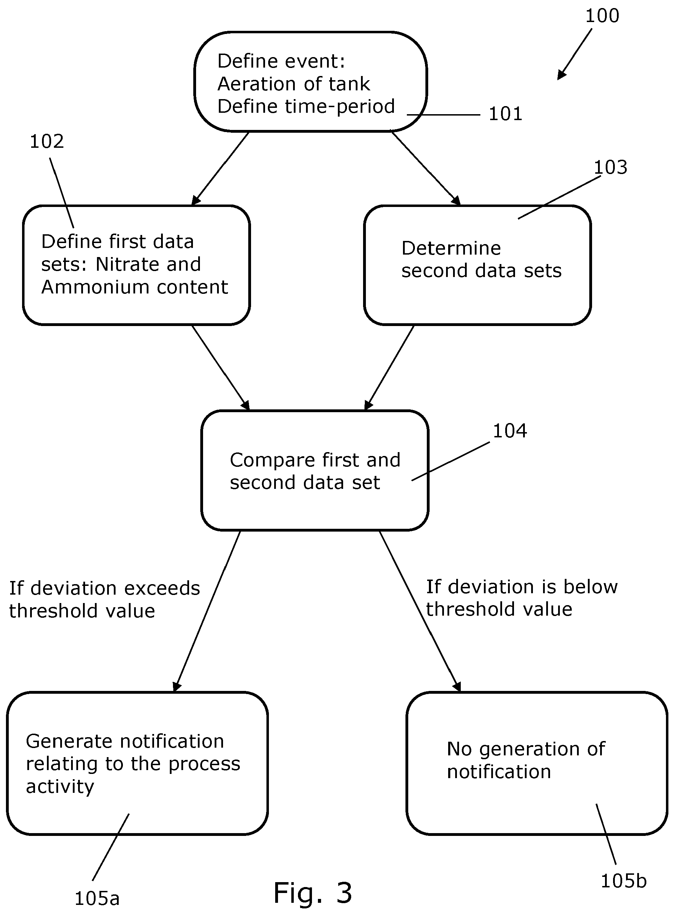

Fig. 3 illustrates an embodiment of a flow diagram 100 for the method. The method is initiated in step 101 in which an event having impact on a process activity of at least one process is defined. In the illustrated embodiment, the defined event is aeration of a process tank in an activated sludge plant. The defined event may be manually initiated/controlled by a control action, e.g. by changing a setpoint for Dissolved Oxygen (DO). It should however be understood that the defined event may alternatively be automatically initiated, e.g., by changing a setpoint for Dissolved Oxygen (DO) in response to measurements and/or in response to an earlier notification and/or in response to a time schedule, etc.

In step 102, two first data sets representing at least one expected process activity is defined, where one of the first data sets represents expected nitrate concentration over time, and where the other one of the first data sets represents expected ammonium concentration over time. It should be understood that in an alternative embodiment, a single first data set representing both expected nitrate concentration and expected ammonium concentration may be applied.

In step 103, two second data sets representing actual process activity in the time-period is determined, where the actual process activity is process activity under impact of the event define in step 101. In this embodiment, the second data sets comprise measured values of nitrate concentration and ammonium concentration, respectively. As described above, a single second data set representing both measured nitrate concentration and measured ammonium concentration may be applied.

In step 104, the second data sets representing actual process activity is compared with the first data sets representing expected process activity. Thus, the expected nitrated concentration over time is compared with the measured nitrate concentrate over time, whereas the expected ammonium concentration over time is compared with the measured ammonium concentrate over time.

If the deviation between the first data set and the second data set exceeds a predetermined threshold value, a notification relating to the process activity for the at least one process is generated in step 105a. If the deviation between the first data set and the second data set is below a predetermined threshold value, no notification relating to the process activity for the at least one process is generated in step 105b. It should be understood that a notification is generated if the deviation for one of the data sets exceeds a predetermined threshold value. Thus, a notification based on nitrate may be generated, if the deviation relating to nitrate exceeds the threshold value for nitrate, whereas no notification may be generated, if the deviation relation to ammonium does not exceed the threshold value for ammonium. It should further be understood that two notifications may be generated, if both the deviation relating to nitrate and the deviation relating to ammonium exceed the respective threshold values.

An operator may, based on the notification, check different elements which may have an influence on the measured value, such as a sensor measuring the nitrate content and/or the ammonium content depending on whether the notification relates to nitrate and/or ammonium, a control unit which is used to control aeration, an air blower, a stirring unit, etc. Thus, the operator may use the notification as a starting point for manual review of the elements. Alternatively, the notification may initiate an automatic review of at least some of the relating to the event and/or the process activity.

## Claims

1. A method of monitoring a plurality of processes in an urban water cycle; the method comprising the steps of:
- defining an event having impact on a process activity of at least one process of the plurality of processes,
- defining a time-period,
- defining a first data set representing at least one expected process activity under impact of the event, the first data set comprising interrelated values of expected process activity and point in time in the time-period, wherein the step of defining the first data set is based at least partly on historical data, the historical data comprising interrelated values of measured process activity and point in time, and wherein the first data set further comprises a ranking parameter ranking later time segments higher than earlier time segments,
- determining a second data set representing actual process activity in the time-period, the actual process activity being the process activity under impact of the event,
- comparing the second data set representing actual process activity with the first data set representing expected process activity, and based thereon,
- generating a notification relating to the process activity for the at least one process, if a deviation between the first data set and the second data set exceeds a predetermined threshold value in the time-period.

2. A method of monitoring according to claim 1, wherein the urban water cycle comprises at least one of a wastewater treatment plant for treatment of wastewater, a sewer system, a water treatment plant for treatment of raw water, and a water network for treated water.

3. A method of monitoring according to claim 1 or 2, wherein the process activity is selected from a group consisting of: biomass activity, such as change over time of a content of e.g. NH4, NO3, PO4, DO,, grit chamber activity, such as flow, turbulence, temperature, sewer activity, such as at least one of filling degree of basin(s), filling degree of pipes, and change of flow , raw water activities, such as coagulation, sedimentation, filtration, chlorination, digester activity, such as change of gas production, dewatering activity, such as change of TS concentration, and equalization activity.

4. A method of monitoring according to any of the preceding claims, wherein the event is selected from a group consisting of: start and/or stop and/or change of rate of any one of aeration, flow, return flow, recirculation flow, rain event, pumping, stirring, dosing of a substance, and backwash.

5. A method of monitoring according to any of the preceding claims, wherein the event is controllable by a control action, and wherein the method further comprising a step of activating the control action.

6. A method of monitoring according to any of the preceding claims, wherein the step of determining the second data set is based on data continuously received to provide a second data set based on real time values.

7. A method of monitoring according to any of the preceding claims, wherein the step of comparing the second data set with the first data set comprises a step of defining a delayed response time for the event, the delayed response time being defined by comparing the expected process activity with the actual process activity at different times by shifting time series of one of the first and second data sets relative to the other one of the first and second data sets.

8. A method of monitoring according to any of the preceding claims, further comprising a step of preparing a mathematical model providing simulation data as a function of process activity measured in the urban water cycle by at least one sensor, wherein the step of defining the first data set comprises a step of defining interrelated values of simulation data and point in time.

9. A method of monitoring according to claim 8, wherein the first data set is based on historical data and simulated data.

10. A method of monitoring according to any of the preceding claims, wherein the step of determining the second data set representing actual process activity is based at least partly on measurements within the urban water cycle.

11. A method of monitoring according to claim 10, wherein at least some of the measurements are online measurements provided by one or more sensors arranged in the urban water cycle.

12. A method of monitoring according to any of the claims 5-11, further comprising a step of deactivating the control action based on the generated notification.

13. A method of monitoring according to any of the preceding claims, further comprising a step of activating a second event based on the generated notification.

## Patentansprüche

1. Verfahren zum Überwachen einer Vielzahl von Prozessen in einem kommunalen Wasserkreislauf, wobei das Verfahren die folgenden Schritte umfasst:
- Definieren eines Ereignisses, das Einfluss auf eine Prozessaktivität mindestens eines Prozesses von der Vielzahl von Prozessen aufweist,
- Definieren eines Zeitraums,
- Definieren eines ersten Datensatzes, der mindestens eine erwartete Prozessaktivität unter dem Einfluss des Ereignisses darstellt, wobei der erste Datensatz zusammenhängende Werte von erwarteter Prozessaktivität und Zeitpunkt in dem Zeitraum umfasst, wobei der Schritt des Definierens des ersten Datensatzes zumindest teilweise auf historischen Daten beruht, wobei die historischen Daten zusammenhängende Werte von gemessener Prozessaktivität und Zeitpunkt umfassen und wobei der erste Datensatz ferner einen Einstufungsparameter umfasst, der spätere Zeitsegmente höher einstuft als frühere Zeitsegmente,
- Bestimmen eines zweiten Datensatzes, der tatsächliche Prozessaktivität in dem Zeitraum darstellt, wobei die tatsächliche Prozessaktivität die Prozessaktivität unter dem Einfluss des Ereignisses ist,
- Vergleichen des zweiten Datensatzes, der tatsächliche Prozessaktivität darstellt, mit dem ersten Datensatz, der erwartete Prozessaktivität darstellt, und auf Grundlage dessen
- Erzeugen einer Benachrichtigung in Bezug auf die Prozessaktivität für den mindestens einen Prozess, falls eine Abweichung zwischen dem ersten Datensatz und dem zweiten Datensatz in dem Zeitraum einen vorbestimmten Schwellenwert überschreitet.

2. Verfahren zum Überwachen nach Anspruch 1, wobei der kommunale Wasserkreislauf mindestens eines von einer Abwasserbehandlungsanlage zur Behandlung von Abwasser, einem Kanalisationssystem, einer Wasserbehandlungsanlage zur Behandlung von Rohwasser und einem Wassernetz für behandeltes Wasser umfasst.

3. Verfahren zum Überwachen nach Anspruch 1 oder 2, wobei die Prozessaktivität aus einer Gruppe ausgewählt ist, die aus Folgendem besteht: Biomasseaktivität, wie beispielsweise Veränderung eines Gehalts von z. B. NH4, NO3, PO4, DO im Verlaufe der Zeit, Sandfangaktivität, wie beispielsweise Durchfluss, Turbulenz, Temperatur, Kanalisationsaktivität, wie beispielsweise mindestens eines von Füllstand von (einem) Becken, Füllstand von Rohren und Veränderung des Durchflusses, Rohwasseraktivität, wie beispielsweise Koagulation, Sedimentation, Filtration, Chlorierung, Faulbehälteraktivität, wie beispielsweise Veränderung der Gasproduktion, Entwässerungsaktivität, wie beispielsweise Veränderung der TS-Konzentration, und Ausgleichsaktivität.

4. Verfahren zum Überwachen nach einem der vorhergehenden Ansprüche, wobei das Ereignis aus einer Gruppe ausgewählt ist, die aus Folgendem besteht: Beginn und/oder Anhalten und/oder Veränderung der Rate eines beliebigen von Belüftung, Durchfluss, Rückfluss, Umlaufdurchfluss, Regenereignis, Pumpen, Rühren, Dosieren einer Substanz und Rückspülen.

5. Verfahren zum Überwachen nach einem der vorhergehenden Ansprüche, wobei das Ereignis durch eine Steuerungshandlung steuerbar ist und wobei das Verfahren ferner einen Schritt des Aktivierens der Steuerungshandlung umfasst.

6. Verfahren zum Überwachen nach einem der vorhergehenden Ansprüche, wobei der Schritt des Bestimmens des zweiten Datensatzes auf Daten beruht, die kontinuierlich empfangen werden, um einen zweiten Datensatz bereitzustellen, der auf Echtzeitwerten beruht.

7. Verfahren zum Überwachen nach einem der vorhergehenden Ansprüche, wobei der Schritt des Vergleiches des zweiten Datensatzes mit dem ersten Datensatz den Schritt des Definierens einer verzögerten Reaktionszeit für das Ereignis umfasst, wobei die verzögerte Reaktionszeit durch Vergleichen der erwarteten Prozessaktivität mit der tatsächlichen Prozessaktivität zu unterschiedlichen Zeiten durch Verschieben von Zeitreihen eines von dem ersten und dem zweiten Datensatz im Verhältnis zu dem anderen von dem ersten und dem zweiten Datensatz definiert wird.

8. Verfahren zum Überwachen nach einem der vorhergehenden Ansprüche, das ferner einen Schritt des Vorbereitens eines mathematischen Modells umfasst, das Simulationsdaten in Abhängigkeit von der Prozessaktivität bereitstellt, die in dem kommunalen Wasserkreislauf durch mindestens einen Sensor gemessen wird, wobei der Schritt des Definierens des ersten Datensatzes einen Schritt des Definierens von zusammenhängenden Werten von Simulationsdaten und Zeitpunkt umfasst.

9. Verfahren zum Überwachen nach Anspruch 8, wobei der erste Datensatz auf historischen Daten und simulierten Daten beruht.

10. Verfahren zum Überwachen nach einem der vorhergehenden Ansprüche, wobei der Schritt des Bestimmens des zweiten Datensatzes, der tatsächliche Prozessaktivität darstellt, zumindest teilweise auf Messungen innerhalb des kommunalen Wasserkreislaufs beruht.

11. Verfahren zum Überwachen nach Anspruch 10, wobei zumindest einige der Messungen Online-Messungen sind, die durch einen oder mehrere Sensoren bereitgestellt werden, die in dem kommunalen Wasserkreislauf angeordnet sind.

12. Verfahren zum Überwachen nach Anspruch 5 bis 11, das ferner einen Schritt des Deaktivierens der Steuerungshandlung auf Grundlage der erzeugten Benachrichtigung umfasst.

13. Verfahren zum Überwachen nach einem der vorhergehenden Ansprüche, das ferner einen Schritt des Aktivierens eines zweiten Ereignisses auf Grundlage der erzeugten Benachrichtigung umfasst.

## Revendications

1. Procédé de surveillance d'une pluralité de processus dans un cycle d'eau urbaine ; le procédé comprenant les étapes suivantes :
- définition d'un évènement ayant un impact sur une activité de processus d'au moins un processus parmi la pluralité de processus,
- définition d'une période de temps,
- définition d'un premier ensemble de données représentant au moins une activité de processus prévue sous l'impact de l'évènement, le premier ensemble de données comprenant des valeurs corrélées d'activité de processus prévue et un moment donné dans la période de temps, dans lequel l'étape de définition du premier ensemble de données est basée au moins partiellement sur des données historiques, les données historiques comprenant des valeurs corrélées d'activité de processus mesurée et un moment donné, et dans lequel le premier ensemble de données comprend en outre un paramètre de classement classant des segments ultérieurs à un rang plus élevé que des segments antérieurs,
- détermination d'un deuxième ensemble de données représentant une activité de processus effective dans la période de temps, l'activité de processus effective étant l'activité de processus sous l'impact de l'évènement,
- comparaison du deuxième ensemble de données représentant une activité de processus effective avec le premier ensemble de données représentant une activité de processus prévue, et, sur cette base,
- génération d'une notification concernant l'activité de processus pour l'au moins un processus, si un écart entre le premier ensemble de données et le deuxième ensemble de données dépasse une valeur seuil prédéterminée dans la période de temps.

2. Procédé de surveillance selon la revendication 1, dans lequel le cycle d'eau urbaine comprend au moins l'un parmi une installation de traitement des eaux usées pour le traitement des eaux usées, un système d'égouts, une installation de traitement de l'eau pour le traitement d'eau brute, et un réseau d'eau pour l'eau traitée.

3. Procédé de surveillance selon la revendication 1 ou 2, dans lequel l'activité de processus est sélectionnée à partir d'un groupe comprenant : une activité de biomasse, telle qu'une modification par exemple de la teneur en NH4, NO3, PO4, DO au fil du temps, une activité de dessableur, telle que le débit, la turbulence, la température, une activité d'égout, telle que l'un au moins parmi le degré de remplissage de bassin(s), le degré de remplissage de tuyaux, et la modification du débit, des activités d'eau brute, telles que la coagulation, la sédimentation, la filtration, la chloration, une activité de digesteur, telle qu'une modification de la production de gaz, une activité de déshydratation, telle qu'une modification de la concentration en MS, et une activité d'équilibrage.

4. Procédé de surveillance selon l'une quelconque des revendications précédentes, dans lequel l'évènement est sélectionné à partir d'un groupe comprenant : un démarrage et/ou un arrêt et/ou un changement de vitesse de l'un quelconque parmi l'aération, un flux, un reflux, un flux de recirculation, un épisode de pluie, un pompage, une agitation, le dosage d'une substance, et un rétrolavage.

5. Procédé de surveillance selon l'une quelconque des revendications précédentes, dans lequel l'évènement peut être contrôlé par une action de contrôle, et dans lequel le procédé comprend en outre une étape d'activation de l'action de contrôle.

6. Procédé de surveillance selon l'une quelconque des revendications précédentes, dans lequel l'étape de détermination du deuxième ensemble de données est basée sur des données reçues en continu pour fournir un deuxième ensemble de données sur la base de valeurs en temps réel.

7. Procédé de surveillance selon l'une quelconque des revendications précédentes, dans lequel l'étape de comparaison du deuxième ensemble de données avec le premier ensemble de données comprend une étape de définition d'un délai de réponse pour l'évènement, le délai de réponse étant défini en comparant l'activité de processus prévue avec l'activité de processus effective à différents moments par décalage de série temporelle de l'un parmi les premier et deuxième ensembles de données par rapport à l'autre parmi les premier et deuxième ensembles de données.

8. Procédé de surveillance selon l'une quelconque des revendications précédentes, comprenant en outre une étape de préparation d'un modèle mathématique fournissant des données de simulation en fonction de l'activité de processus mesurée dans le cycle d'eau urbaine par au moins un capteur, dans lequel l'étape de définition du premier ensemble de données comprend une étape de définition de valeurs corrélées de données de simulation et d'un moment donné.

9. Procédé de surveillance selon la revendication 8, dans lequel le premier ensemble de données est basé sur des données historiques et des données de simulation.

10. Procédé de surveillance selon l'une quelconque des revendications précédentes, dans lequel l'étape de détermination du deuxième ensemble de données représentant l'activité de processus effective est basée au moins partiellement sur des mesures dans le cycle d'eau urbaine.

11. Procédé de surveillance selon la revendication 10, dans lequel au moins certaines des mesures sont des mesures en ligne fournies par un ou plusieurs capteurs installés dans le cycle d'eau urbaine.

12. Procédé de surveillance selon l'une quelconque des revendications 5 à 11, comprenant en outre une étape de désactivation de l'action de contrôle sur la base de la notification générée.

13. Procédé de surveillance selon l'une quelconque des revendications précédentes, comprenant en outre une étape de désactivation d'un deuxième évènement sur la base de la notification générée.
